**Europäisches Patentamt**

**European Patent Office**

**Office européen des brevets**

(19)

(11) Veröffentlichungsnummer : **0 398 219 B1**

(12)

# EUROPÄISCHE PATENTSCHRIFT

(45) Veröffentlichungstag der Patentschrift :
23.12.92 Patentblatt 92/52

(51) Int. Cl.$^5$: **B65G 25/02, A22B 7/00**

(21) Anmeldenummer : **90109036.5**

(22) Anmeldetag : **14.05.90**

(54) **Schrittweise Transportvorrichtung, insbesondere für Transporthaken in Schlachthöfen.**

(30) Priorität : **17.05.89 DE 3916059**

(43) Veröffentlichungstag der Anmeldung :
**22.11.90 Patentblatt 90/47**

(45) Bekanntmachung des Hinweises auf die
Patenterteilung :
**23.12.92 Patentblatt 92/52**

(84) Benannte Vertragsstaaten :
**AT BE CH DE DK ES FR GB IT LI NL SE**

(56) Entgegenhaltungen :
DE-A- 3 440 601
DE-B- 2 217 462
DE-U- 8 806 617

(73) Patentinhaber : **Banss Maschinenfabrik GmbH
& Co. KG
Industriestrasse 4
W-3560 Biedenkopf (DE)**

(72) Erfinder : **Schreiber, Helmut
Englertstrasse 56A
W-8750 Aschaffenburg (DE)**

(74) Vertreter : **Klunker . Schmitt-Nilson . Hirsch
Winzererstrasse 106
W-8000 München 40 (DE)**

EP 0 398 219 B1

Jouve, 18, rue Saint-Denis, 75001 PARIS

**Beschreibung**

Die Erfindung bezieht sich auf eine Transportvorrichtung, insbesondere für Schlachthöfe oder Fleisch-Kuhlräume, zum schrittweisen Bewegen von Transportelementen, insbesondere Haken für Schlachttiere oder Schlachttierteile, längs einer Transportbahn, mit mindestens einem der Transportbahn zugeordneten Hubbalken, der mechanisiert anhebbar und absenkbar ist, wobei im Bereich des Hubbalkens befindliche Transportelemente beim Anheben des Hubbalkens von der Transportbahn abgehoben und beim Absenken des Hubbalkens auf der Transportbahn abgesetzt werden, und mit einem Antrieb zum Bewegen der abgehobenen Transportelemente in Längsrichtung der Transportbahn.

Eine Schlachthof-Transportvorrichtung dieser Art ist aus dem DE-GM 88 06 617 bekannt. Bei dieser Transportvorrichtung stellt der Hubbalken, der an seiner Oberseite eine Reihe von in Längsrichtung beabstandeten Vertiefungen aufweisen kann, zugleich den Antrieb zum Bewegen der Schlachthofhaken in Längsrichtung der Transportbahn dar, weil er zusätzlich zu seiner Anhebe- und Absenkbewegung eine angetriebene Vorwärts- und Rückwärtsbewegung ausführen kann; dies ist auch bei der erfindungsgemäßen Transportvorrichtung bevorzugt. Die bekannte Transportvorrichtung ist allerdings lediglich für geradlinige Transportbahnabschnitte vorgesehen.

Der Erfindung liegt die Aufgabe zugrunde, eine Transportvorrichtung der eingangs genannten Art für gekrümmte Transportbahnabschnitte verfügbar zu machen.

Zur Lösung dieser Aufgabe ist die Transportvorrichtung erfindungsgemäß dadurch gekennzeichnet, daß für einen gekrümmten Transportbahnabschnitt vorgesehen sind:

(a) ein gekrümmter Hubbalken, der mechanisiert anhebbar und absenkbar ist; und

(b) ein in Längsrichtung antreibbares, in Seitenrichtung flexibles Bewegungselement für die Transportelemente, das sich von dem Hubbalken eines benachbarten Transportbahnabschnitts mindestens bis zu einem Ende des gekrümmten Hubbalkens erstreckt.

Gemäß einer alternativen Lösung ist die Transportvorrichtung dadurch gekennzeichnet, daß für einen gekrümmten Transportbahnabschnitt zwischen zwei beidendig anschließenden Transportbahnabschnitten ein in einer oberen Aussparung des gekrümmten Transportbahnabschnitts verlaufendes, von unten unterstütztes, in Seitenrichtung flexibles Bewegungselement für die Transportelemente vorgesehen ist, das an dem Hubbalken mindestens eines der beiden anschließenden Transportbahnabschnitte befestigt und durch diesen in Längsrichtung antreibbar ist; und daß das flexible Bewegungselement klinkenartige Mitnehmer für die Transportelemente aufweist, wobei die Mitnehmer bei der Rückbewegung des Bewegungselementes unter den Transportelementen vorbeigehen, vorzugsweise federnd nach unten ausweichen.

Ein wesentlicher, der bekannten Transportvorrichtung innewohnender Vorteil besteht darin, daß die Transporthaken nicht mehr gleitend auf der Transportbahn vorgeschoben, sondern reibungsfrei in von der Transportbahn abgehobenem Zustand vorwärtsbewegt werden. Außerdem läßt sich, je nach Lange des Hubbalkens bzw. der längs der Transportbahn vorgesehenen Hubbalken eine kleinere oder größere Anzahl von Transporthaken zugleich vorwärtsbewegen, ohne daß sich der Abstand der von einem Hubbalken zugleich vorwärtsbewegten Schlachthaken mehr als unwesentlich ändert. Der erstgenannte Vorteil bleibt bei der vorstehend an erster Stelle genannten, erfindungsgemäßen Lösung mindestens im wesentlichen auch für gekrümmte Transportbahnabschnitte erhalten. Bei der oben an zweiter Stelle genannten, erfindungsgemäßen Lösung bleibt der zweitgenannte Vorteil erhalten, auch wenn sich die Transportelemente gleitend oder rollend auf dem gekrümmten Transportbahnabschnitt vorwärtsbewegen. Die hiermit verbundene Reibung ist nicht besonders störend, weil die gekrümmten Transportbahnabschnitte in der Regel im Vergleich zur gesamten Transportbahn relativ kurz sind.

Die erfindungsgemäße Transportvorrichtung hat besonders große Bedeutung für Kühlräume bzw. Kühlhäuser für Schlachttiere bzw. Schlachttierteile, weil sich dort in der Regel ein Eingangs-Transportbahnabschnitt in eine Vielzahl von gekrümmt abzweigenden Aufbewahrungs-Transportbahnabschnitten aufteilt und weil die Aufbewahrungs-Transportbahnabschnitte in der Regel gekrümmt in einen Ausgangs-Transportbahnabschnitt einmünden. Durch die Abstandseinhaltung der Transporthaken auch in den gekrümmten Transportbahnabschnitten läßt sich erreichen, daß sich die Schlachttiere bzw. Schlachttierteile auch in diesen gekrümmten Transportbahnabschnitten in wünschenswerter Weise nicht gegenseitig berühren.

Es ist bevorzugt, wenn der gekrümmte Hubbalken und/oder das in Seitenrichtung flexible Bewegungselement auf der Oberseite Einrichtungen zum lagedefinierenden Eingriff mit den Transportelementen haben, insbesondere beabstandete Vertiefungen, beabstandete Mitnehmer oder dergleichen. Der gekrümmte Hubbalken befindet sich vorzugsweise in einer oberen Aussparung des gekrümmten Transportbahnabschnitts, kann aber beispielsweise auch einseitig oder beidseitig neben dem gekrümmten Transportbahnabschnitt vorgesehen sein.

Für den Längsantrieb der Transportelemente im Bereich des gekrümmten Hubbalkens ist vorzugsweise vorgesehen, daß dem gekrümmten Hubbalken, der in diesem Fall kürzer als der gekrümmte Transportbahnabschnitt sein kann, ein eigener Längsantrieb, vorzugsweise ausgebildet als Zylinder-Kolben-Einheit zugeordnet ist. Es ist aber auch möglich, auf einen eigenen Längsantrieb des gekrümmten Hubbalkens zu verzichten und diesen durch das flexible Bewegungselement, das an den Hubbalken des benachbarten Transportabschnitts angeschlossen ist, mitnehmen zu lassen.

Was den Antrieb des flexiblen Bewegungselements in Längsrichtung anlangt, ist dessen Mitnahme durch den Hubbalken des benachbarten Transportbahnabschnitts und/oder den zugeordneten Antrieb des gekrümmten Hubbalkens bevorzugt.

Eine weitere bevorzugte Möglichkeit besteht darin, daß sich das flexible Bewegungselement nicht nur bis zum Endbereich des gekrümmten Hubbalkens erstreckt, sondern sich im Bereich des gekrümmten Hubbalkens oberseitig von diesem längs des gesamten gekrümmten Transportbahnabschnitts in einer oberen Aussparung des Transportbahnabschnitts erstreckt. In diesem Fall ist ein eigener zugeordneter Längsantrieb des gekrümmten Hubbalkens entbehrlich. Der Hubbalken leistet eine Anhebe- und Absenkbewegung des flexiblen Bewegungselements im Bereich des gekrümmten Transportbahnabschnitts. Der Antrieb des flexiblen Bewegungselements in Längsrichtung kommt vorzugsweise von dem Hubbalken des benachbarten Transportbahnabschnitts.

Insbesondere bei der Variante mit gekrümmten Hubbalken soll das in Seitenrichtung flexible Bewegungselement vorzugsweise nicht so weit durchhängen, daß die von ihm ergriffenen Transportelemente auf der Transportbahn aufsitzen. Dies läßt sich durch entsprechend straffe Spannung des flexiblen Bewegungselements oder durch gegen Durchhängen steife Ausbildung des flexiblen Bewegungselements erreichen. In besonderen Fällen kann es jedoch günstig sein, das flexible Bewegungselement durch ein Übergangsstück zwischen dem Hubbalken des benachbarten Transportbahnabschnitts und dem gekrümmten Hubbalken zu unterstützen. Das Übergangsstück kann mit dem Hubbalken des benachbarten Transportbahnabschnitts oder mit dem gekrümmten Hubbalken vereinigt sein. Insbesondere wenn der gekrümmte Hubbalken keine Bewegung in Längsrichtung vollführt, empfiehlt sich ein Schiebesitz zwischen dem Übergangsstück und demjenigen Hubbalken, mit dem das Übergangsstück nicht integral vereinigt ist.

In den meisten Fällen schließen sich an den gekrümmten Transportbahnabschnitt beidendig andere Transportbahnabschnitte an, so daß die vorstehend beschriebenen Maßnahmen, insbesondere hinsichtlich des flexiblen Bewegungselements, vorzugsweise an beiden Enden des gekrümmten Hubbalkens vorgenommen sind. Das flexible Bewegungselement muß selbst in diesem Fall nicht zwingend an den Hubbalken der beiden anschließenden Transportbahnschnitte befestigt sein. Eine Befestigung nur an dem Hubbalken des in Bewegungsrichtung vorderen oder des in Bewegungsrichtung hinteren, anschließenden Transportbahnabschnitts reicht im Prinzip aus, wiewohl eine Befestigung an den beiden anschließenden Hubbalken bevorzugt ist. Es gibt Ausführungen, bei denen das flexible Bewegungselement auch Längskräfte in drückender Richtung übertragen kann, wie weiter unten bei den Ausführungsbeispielen noch deutlicher werden wird.

Bevorzugte Möglichkeiten für das mechanisierte Anheben und Absenken des gekrümmten Hubbalkens sind, ein vertikaler Linearantrieb, ein Exzenterantrieb, ein Nockenantrieb oder ein Hubkeilantrieb, jeweils besonders bevorzugt mit einer Zylinder-Kolben-Einheit als Antriebsquelle.

Eine konstruktiv besonders einfache und bevorzugte Ausbildung des flexiblen Bewegungselements ist eine Kette, dessen Kettenglieder in seitlicher Richtung relativ zueinander verschwenkbar sind. Insbesondere können die Kettenglieder durch Bolzen miteinander verbunden sein, wobei zwischen dem jeweiligen Bolzen und der Bolzenaufnahmebohrung mindestens eines der beiden benachbarten Kettenglieder Spiel für die Flexibilität der Kette besteht. Eine weitere bevorzugte Möglichkeit besteht darin, die Kettenglieder durch aufrechte Bolzen miteinander zu verbinden, woraus die gewünschte Flexibilität der Kette in Seitenrichtung resultiert.

Eine weitere bevorzugte Ausgestaltungsmöglichkeit besteht darin, das flexible Bewegungselement aus mindestens einem Längs-Stahlseil und daran beabstandet befestigten Elementgliedern aufzubauen. Ein derartiges flexibles Bewegungselement kann allerdings nur Zugkräfte übertragen.

Es wird ausdrücklich darauf hingewiesen, daß erfindungsgemäß das beschriebene flexible Bewegungselement auch entbehrlich sein kann. Wenn man nämlich den gekrümmten Hubbalken und/oder den Hubbalken des benachbarten Transportbahnabschnitts im einander zugewandten Endbereich in Draufsicht verjüngt ausbildet, kann der gekrümmte Hubbalken mit seinem verjüngten Endbereich in den benachbarten Transportbahnabschnitt eintreten und kann der Endbereich des Hubbalkens des benachbarten Transportbahnabschnitts ein Stück in den gekrümmten Transportbahnabschnitt eintreten. Wenn die jeweilige Bewegungsstrecke des Hubbalkens des benachbarten Transportbahnabschnitts bzw. des gekrümmten Hubbalkens passend gewählt sind, kann auf diese Weise mindestens ein nachfolgendes Transportelement von dem gekrümmten Hubbalken übernommen werden.

Wenn man die Möglichkeit haben will, mittels des gekrümmten Hubbalkens eine Längsbewegung der in seinem Bereich befindlichen Transportelemente durchzuführen, ohne daß der oder die Hubbalken des oder der benachbarten Transportbahnabschnitte gleichzeitig längsbewegend in Aktion treten, und wenn das flexible Bewegungselement vorhanden ist, empfiehlt sich eine Ausbildung des flexiblen Bewegungselements, die einen Höhenversatz zwischen den Aufnahmestellen für die Transportelemente in dem gekrümmten Transportbahnabschnitt und dem Hubbalken des benachbarten Transportbahnabschnitts zuläßt. Dann kann beispielsweise mit angehobenem, gekrümmten Hubbalken in dem gekrümmten Transportbahnabschnitt in Längsrichtung transportiert werden, während der Hubbalken im benachbarten Transportbahnabschnitt ohne Transportwirkung sich unter den Transportelementen entlangbewegt, und umgekehrt.

Die Erfindung und Ausgestaltungen der Erfindung werden nachfolgend anhand von zeichnerisch dargestellten Ausführungsbeispielen noch näher erläutert. Es zeigt:

Figur 1 einen Teil einer Transportbahn in Draufsicht;

Figur 2 die Transportbahn von Fig. 1 im Querschnitt längs II-II in Fig. 1;

Figuren 3 bis 5 jeweils eine Teillänge eines flexiblen Bewegungselements in Draufsicht;

Figur 6 des flexible Bewegungselement von Fig. 5 im Querschnitt längs VI-VI in Fig. 5.

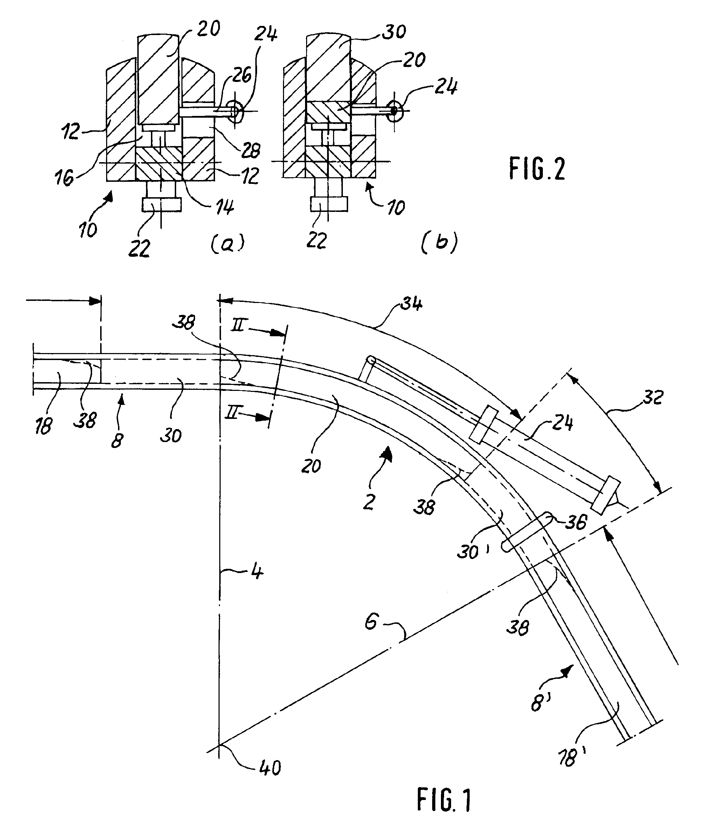

Anhand der Figuren 1 und 2 werden zunächst einige Ausführungsformen der erfindungsgemäßen Transportvorrichtung grundsätzlich erläutert. Bei der in Fig. 1 dargestellten Teillänge einer Transportvorrichtung erkennt man in der Mitte einen gekrümmten Transportbahnabschnitt 2, der durch die radialen Linien 4 und 6 begrenzt ist, links daran anschließend einen benachbarten, geraden Transportbahnabschnitt 8 und rechts an den gekrümmten Transportbahnabschnitt 2 anschließend einen benachbarten, geraden Transportbahnabschnitt 8'. Im Querschnitt sind die Transportbahnabschnitte 2, 8, 8' beispielsweise so aufgebaut, wie in Fig. 2 (a) dargestellt. Die eigentliche Transportbahn 10 ist oben abgerundet U-förmig mit zwei beabstandeten Seitenwangen 12, die über untere, in Längsrichtung beabstandete Distanzstücke 14 zusammengehalten sind. Auf diese Art ist eine mittlere, oben offene, tiefe Aussparung 16 in der Transportbahn 10 gebildet.

In der Aussparung 16 ist ein oben leicht abgerundeter Hubbalken 18 angeordnet. Im Fall der geraden Abschnitte 8 und 8' ist der Hubbalken 18 in Draufsicht gerade. Im Fall des kreisbogenförmig gekrümmten Abschnitts 2 ist der Hubbalken in Draufsicht entsprechend kreisförmig gekrümmt und wird demzufolge als gekrümmter Hubbalken 20 bezeichnet. Jeder Hubbalken 18, 18', 20 läßt sich durch zwei in seiner Längsrichtung mit Abstand angeordnete, pneumatische oder hydraulische Zylinder-Kolben-Einheiten 22 mechanisiert anheben oder absenken. In Fig. 2 (a) ist der angehobene Zustand gezeichnet. Die Zylinder-Kolben-Einheiten greifen durch Freiräume zwischen den einzelnen Distanzstücken 14 oder durch Öffnungen in einem in Längsrichtung durchgehenden Distanzstück 14. Im abgesenkten Zustand befindet sich die Oberseite des jeweiligen Hubbalkens 18, 18', 20 leicht unterhalb der gekrümmten Oberseite der betreffenden Transportbahn 10.

Jeder Hubbalken 18, 18', 20 ist in Längsrichtung seines Transportbahnabschnitts 8, 8', 2 in Längsrichtung angetrieben bewegbar, und zwar mittels einer neben dem betreffenden Abschnitt 8, 8', 2 angeordneten, pneumatischen oder hydraulischen Zylinder-Kolben-Einheit 24, wobei aus Übersichtsgründen lediglich die Zylinder-Kolben-Einheit für den gekrümmten Hubbalken 20 eingezeichnet ist. Jeder Hubbalken 18, 18', 20 weist einen seitlich fortragenden Fortsatz 26 auf, der einen Schlitz 28 geeigneter Länge in einer der Seitenwangen 12 nach außen durchdringt. Am äußeren Ende des Fortsatzes 26 ist die betreffende Zylinder-Kolben-Einheit 24 angeschlossen. Der Schlitz 28 hat eine geeignete Höhe, um dem Fortsatz 26 zu erlauben, die bereits beschriebene Anhebe- und Absenkbewegung des betreffenden Hubbalkens 18, 18', 20 mitzumachen. Die betreffende Zylinder-Kolben-Einheit 24 ist so gelenkig angeschlossen, daß diese Anhebe- und Absenkbewegung möglich ist. Es versteht sich, daß die Oberseiten der bereits beschriebenen, vertikalen Zylinder-Kolben-Einheiten 22 derart reibungsarm, insbesondere als Gleitfläche oder mit linearen Wälzlagern, gestaltet sind, daß der betreffende Hubbalken 18, 18', 20 seine Längsbewegung relativ zu diesen Oberseiten reibungsarm ausführen kann.

An dieser Stelle sei darauf hingewiesen, daß die vertikalen Zylinder-Kolben-Einheiten 22 nur eine von mehreren Möglichkeiten für das mechanisierte Anheben und Absenken der Hubbalken 18, 18', 20 sind. Andere Möglichkeiten sind insbesondere Exzenter, die mit ihrem exzentrischen, mit einem Wälzlager versehenen Zapfen an der Unterseite des Hubbalkens abrollen, oder Nocken, die sich an der Unterseite des Hubbalkens abwälzen, oder nach dem Keilprinzip arbeitende Einrichtungen. All diese Einrichtungen können insbesondere mittels Zylinder-Kolben-Einheiten angetrieben werden. Aber auch elektrische Antriebe sind an dieser Stelle gut einsetzbar.

Anhand von Fig. 1 werden jetzt mehrere Möglichkeiten des funktionellen Zusammenwirkens zwischen den geraden Hubbalken 18, 18' und dem gekrümmten Hubbalken 20 beschrieben.

Eine erste Möglichkeit besteht im Vorsehen von in Seitenrichtung flexiblen Bewegungselementen 30, 30' jeweils zwischen einem geraden Hubbalken 18 bzw. 18' und dem gekrümmten Hubbalken 20. Als einfachstes, flexibles Bewegungselement 30, 30' kann man sich eine Kette vorstellen, deren Kettenglieder in der Zeichnungsebene der Fig. 1 gegeneinander verschwenkbar sind. Andere Beispiele werden weiter unten noch naher erläutert.

Die Bewegungselemente 30, 30' sind jeweils mit einem Ende an dem Ende eines geraden Hubbalkens 18, 18' und mit dem anderen Ende an einem Ende des gekrümmten Hubbalkens 20 befestigt. In Fig. 1 ist der gekrümmte Hubbalken 20 in einer linken Position gezeichnet, die entweder seine linke Endposition oder eine Position ein Stück vor seiner linken Endposition darstellt. Wenn der gekrümmte Hubbalken 20 ausgehend von der gezeichneten Position um eine Kreisbogenstrecke 32 nach rechts in seiner Längsrichtung bewegt wird, kommt das linke Bewegungselement 30 aus dem geraden Transportbahnabschnitt 8 in den gekrümmten Transportbahnabschnitt 2. Zugleich kommt das rechte Bewegungselement 30' aus dem gekrümmten Transportbahnabschnitt 20 in den rechten, geraden Transportbahnabschnitt 8'. Hierfür wird die beschriebene, seitliche Flexibilität der Bewegungselemente 30, 30' benötigt. Der gekrümmte Hubbalken 20 hat eine Kreisbogenlänge 34, die um die beschriebene Kreisbogenstrecke 32 kürzer ist als die Kreisbogenlänge des gekrümmten Transportbahnabschnitts 2.

Aus dem Beschriebenen resultiert, daß die Zylinder-Kolben-Einheit 24 für den Längsantrieb des gekrümmten Hubbalkens 20 auch entbehrlich ist. Man kann den gekrümmten Hubbalken 20 auch über die Bewegungselemente 30, 30' indirekt von den geraden Hubbalken 18, 18' her antreiben.

Eine weitere Möglichkeit besteht darin, die Bewegungselemente 30, 30' auf die Oberseite des gekrümmten Hubbalkens 20 zu verlängern und so ein in Seitenrichtung flexibles, von dem linken, geraden Hubbalken 18 zu dem rechten, geraden Hubbalken 18' durchgehendes Bewegungselement 30 zu haben. Diese Konfiguration ist in Fig. 2 (b) veranschaulicht. Der gekrümmte Hubbalken 20 ist in Vertikalrichtung weniger hoch. Stattdessen ist er an seiner Oberseite von dem Bewegungselement 30 überlagert. Die Oberseite des Bewegungselements 30 ist genauso hoch, wie vorher die Oberseite des gekrümmten Hubbalkens 20 war. Ansonsten ist alles gleich geblieben. Man erkennt, daß in diesem Fall die Zylinder-Kolben-Einheit 24 für den gekrümmten Hubbalken 20 nutzlos ist, es sei denn, man sieht eine formschlüssige Verankerung zwischen der Oberseite des jetzt flacheren gekrümmten Hubbalkens 20 und der Unterseite des Bewegungselements 30 vor. Der gekrümmte Hubbalken 20 hat lediglich noch die Funktion, den mittleren Bereich des Bewegungselements 30 anzuheben und abzusenken. Infolgedessen wird in diesem Fall der gekrümmte Hubbalken 20 vorzugsweise nicht in der in Fig. 1 gezeichneten, linken Position, sondern in einer in Umfangsrichtung mittleren Position des gekrümmten Transportbahnabschnitts 20 angeordnet, oder ist so lang wie der gekrümmte Transportbahnabschnitt 2.

Eine weitere Möglichkeit besteht - ausgehend von der zuletzt beschriebenen Möglichkeit - darin, bei zwischen den geraden Hubbalken 18 und 18' durchgehendem Bewegungselement 30 den gekrümmten Hubbalken 20 ganz wegzulassen und die Unterseite des Bewegungselements 30 stattdessen auf einer geeigneten Abstützfläche am Grund der Aussparung 16 des gekrümmten Transportbahnabschnitts 2 laufen zu lassen. In diesem Fall liegt die generelle Oberseite des Bewegungselements 30 knapp unterhalb der Oberseite der Seitenwangen 12. Das Bewegungselement 30 weist oberseitig nicht gezeichnete Mitnehmer auf, die in Vorwärtsbewegungsrichtung des Bewegungselements 30 hinter Transportelemente (von denen eines in Form eines Transporthakens 36 angedeutet ist) greifen und diese längs der Transportbahn verschieben. In der Rückwärtsbewegungsrichtung des Bewegungselements 30 schwenken die Mitnehmer an den Transportelementen nach unten, so daß diese keinen Antrieb für eine Rückwärtsbewegung erhalten.

Noch eine weitere, besonders einfache Möglichkeit besteht darin, auf die flexiblen Bewegungselemente 30, 30' bzw. das durchgehende, flexible Bewegungselement 30 ganz verzichten und stattdessen die beiden Endbereiche des gekrümmten Hubbalkens 20 sowie die dem gekrümmten Hubbalken 20 zugewandten Endbereiche der geraden Hubbalken 18, 18' verjüngt auszubilden. Dies ist in Fig. 1 mit den gestrichelten Linien 38 angedeutet. Konkret handelt es sich um Materialwegnahmen auf der radial inneren Seite in den beiden Endbereichen des gekrümmten Hubbalkens 20 und um Materialwegnahmen an den gezeichneten Endbereichen der geraden Hubbalken 18, 18' radial außen, gesehen vom Krümmungsmittelpunkt 40 des gekrümmten Transportbahnabschnitts 2. Man erkennt, daß infolgedessen die Endbereiche des gekrümmten Hubbalkens 20 ein entsprechendes Stück in die geraden Transportbahnabschnitte 8, 8' eindringen können. Analog können die gezeichneten Endbereiche der geraden Hubbalken 18, 18' ein Stück in den gekrümmten Transportbahnabschnitt 2 eindringen. Demzufolge kann man den gekrümmten Hubbalken 20 in seiner Längsrichtung länger machen als in Fig. 1 gezeichnet. Fig. 1 stellt für diesen Fall nicht die linke Endposition des gekrümmten Hubbalkens 20 dar, sondern eine Stellung ein Stück vor dieser linken Endposition. Man kann sich vorstellen, daß bei dieser Ausführung z.B. der linke, gerade Hubbalken 18 mit seinem rechten Endbereich ein oder sogar mehrere Transportelemente 36 so weit nach rechts bringen und auf der eigentlichen Transportbahn 10 absetzen kann, daß es bzw. sie bei ganz nach links bewegtem, gekrümmtem Hubbalken von dessen linkem Endbereich angehoben und in Längsrichtung des gekrümmten Hubbalkens 20 nach rechts bewegt werden können. Analoges gilt für den Übergang zwischen dem rechten Endbereich des gekrümmten Hubbalkens 20 und dem rechten geraden Hubbalken 18'. In diesem Fall ist selbstverständlich ein Längsantrieb des gekrümmten Hubbalkens 20 zwingend erforderlich.

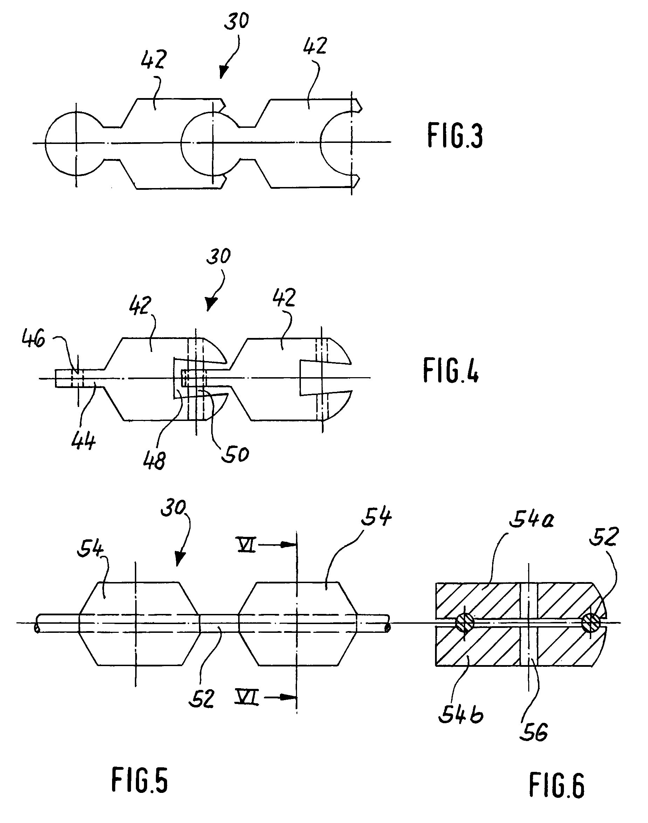

Die Fig. 3 bis 6 zeigen einige mögliche Ausführungsformen für das bzw. die Bewegungselemente 30, 30'.

Bei Fig. 3 ist das Bewegungselement als zug- und druckkraftübertragende Kette ausgebildet, deren Kettenglieder 42 in Vertikalrichtung ineinandergesteckt sind, und zwar mit einem in Draufsicht mehr als dreiviertelkreisförmigen Zapfen jeweils in eine in Draufsicht mehr als halbkreisförmige Aufnahme eines benachbarten Kettenglieds 42. Beispielsweise durch oberhalb und unterhalb befestigte Laschen kann dafür gesorgt sein, daß die Kette ordnungsgemäß zusammenbleibt.

Bei Fig. 4 handelt es sich ebenfalls um eine Kette aus einer Reihe von Gliedern 42. Jedes Glied 42 hat an einem Ende einen plattenartigen Fortsatz 44 mit einer Querbohrung 46. Jedes Glied hat am anderen Ende eine vertikale verlaufende Nut 48. Ein horizontaler Bolzen 50 überbrückt die Nut 48 und geht durch die beschriebene Bohrung 46 des Fortsatzes 44 des anschließenden Kettenglieds 42. Zwischen der Bohrung 46 und dem Bolzen 50 sowie zwischen den Wänden der Nut 48 und dem Fortsatz 44 des anschließenden Kettenglieds 42 ist so viel Spiel, daß die gewünschte seitliche Flexibilität der Kette 30 in der Zeichnungsebene der Fig. 4 vorhanden ist.

Wenn Steifigkeit des Bewegungselements 30 gegenüber Durchhängen aus einer Horizontalebene gewünscht ist, kann man beispielsweise eine Kette ähnlich der in Fig. 4 gezeichneten verwenden, wobei dann allerdings Fig. 4 statt der bisherigen Draufsicht eine Seitenansicht darstellt und die beschriebenen Spiele sowohl zwischen dem Bolzen 50 und der Bohrung 46 als auch zwischen den Wänden der Nut 48 und dem Fortsatz 44 eliminiert sind.

Die Fig. 5 und 6 zeigen ein Bewegungselement 30, das aus zwei übereinander mit Abstand in Längsrichtung verlaufenden Stahlseilen 52 und darauf mit gegenseitigem Abstand befestigten Elementgliedern 54 besteht. Konkret besteht jedes Elementglied 54 aus zwei Hälften 54a und 54b, die mittels einer nicht eingezeichneten Schraube durch eine Bohrung 56 verbunden sind und zwischen sich die Stahlseile 52 einklemmen. Es versteht sich, daß dieses Bewegungselement 30 im wesentlichen nur Zugkräfte übertragen kann.

Es versteht sich ferner, daß die beschriebenen Bewegungselemente 30 bzw. deren Glieder 42 oder 54 eine derartige Gestalt haben, daß das Bewegungselement 30 in die beschriebene, obere Aussparung 16 des jeweiligen Transportbahnabschnitts 8, 8', 2 paßt und insbesondere auch der Krümmung des gekrümmten Transportbahnabschnitts 2 folgen kann.

Wie Fig. 1 und die zugehörige Beschreibung vor Augen geführt haben, erstreckt sich das jeweilige Bewegungselement 30, 30' über eine Freidistanz gegebenenfalls wechselnder Länge zwischen den Enden benachbarter Hubbalken 18, 18', 20. Wenn ein dortiges Durchhängen unerwünscht ist und wenn man nicht auf die Eigensteifigkeit oder die Vorspannung des Bewegungselements 30, 30' abstellen will, ist es möglich, in der jeweiligen Transportbahn-Aussparung 16 ein nicht eingezeichnetes Übergangsstück vorzusehen, das mit seiner Oberseite das Bewegungselement 30, 30' von unten her abstützt. Das Übergangsstück kann beispielsweise so gestaltet sein, daß es mit den anschließenden Hubbalken 18, 18', 20 nach Art eines Schiebesitzes zusammenwirkt, ohne die Anhebe- und Absenkbewegungen der Hubbalken 18, 18', 20 zu behindern.

Vorzugsweise sind die Oberseiten der Hubbalken 18, 18', 20 und der Bewegungselemente 30, 30' mit in Längsrichtung beabstandeten, nicht eingezeichneten Vertiefungen versehen, um definierte Auflagerpositionen für die Transportelemente 36 zu schaffen.

Aus dem Vorstehenden ist bereits deutlich geworden, daß es Ausführungsformen der Transportvorrichtung mit unterschiedlichen Bewegungsabstimmungen der Hubbalken 18, 18', 20 gibt. Bei einigen Ausführungsformen bewegen sich alle drei Hubbalken 18, 18', 20 stets gleichzeitig und gleichsinnig. Bei anderen Ausführungsformen bewegen sich die geraden Hubbalken 18, 18' stets gleichzeitig und gleichsinnig. Schließlich gibt es Ausführungsformen, bei denen alle drei Hubbalken 18, 18', 20 zu unterschiedlichen Zeiten bewegt werden können. Gerade im letztgenannten Fall ist es erforderlich, daß die Bewegungselemente 30, 30' auch in Vertikalrichtung flexibel genug sind, um die sich ergebenden Höhenunterschiede zu überbrücken.

**Patentansprüche**

1. Transportvorrichtung, insbesondere für Schlachthöfe oder Fleisch-Kühlräume, zum schrittweisen Bewegen von Transportelementen (36), insbesondere Haken für Schlachttiere oder Schlachttierteile, längs einer Transportbahn (10), mit mindestens einem der Transportbahn (10) zugeordneten Hubbalken (18, 18', 20), der mechanisiert anhebbar und absenkbar ist, wobei im Bereich des Hubbalkens (18, 18',20) befindliche Transportelemente (36) beim Anheben des Hubbalkens von der Transportbahn abgehoben und beim Absenken des Hubbalkens (18, 18', 20) auf der Transportbahn abgesetzt werden, und mit einem Antrieb (24) zum Bewegen der abgehobenen Transportelemente (36) in Längsrichtung der Transportbahn,
dadurch gekennzeichnet,
daß für einen gekrümmten Transportbahnabschnitt (2) vorgesehen sind:
(a) ein gekrümmter Hubbalken (20), der mechanisiert anhebbar und absenkbar ist; und
(b) ein in Längsrichtung antreibbares, in Seitenrichtung flexibles Bewegungselement (30, 30') für die Transportelemente (36), das sich von dem Hubbalken eines benachbarten Transportbahnabschnittes (8, 8') mindestens bis zu einem Ende des gekrümmten Hubbalkens (20) erstreckt.

2. Transportvorrichtung nach Anspruch 1,
dadurch gekennzeichnet,
daß dem gekrümmten Hubbalken (20) ein eigener Längsantrieb (24), vorzugsweise ausgebildet als Zylinder-Kolben-Einheit, zugeordnet ist.

3. Transportvorrichtung nach Anspruch 1 oder 2,
dadurch gekennzeichnet,
daß das flexible Bewegungselement (30, 30') durch den Hubbalken (18, 18') des benachbarten Transportbahnabschnitts (8, 8') und/oder den gekrümmten Hubbalken (20) antreibbar ist.

4. Transportvorrichtung nach einem der Ansprüche 1 bis 3,
dadurch gekennzeichnet,
daß sich das flexible Bewegungselement (30, 30') im Bereich des gekrümmten Hubbalkens (20) oberseitig von diesem, längs des gesamten gekrümmten Transportbahnabschnitts (2) in einer oberen Aussparung (16) des Transportbahnschnitts (2) erstreckt.

5. Transportvorrichtung nach einem der Ansprüche 1 bis 4,
dadurch gekennzeichnet,
daß das flexible Bewegungselement (30, 30') durch ein Übergangsstück zwischen dem Hubbalken (18, 18') des benachbarten Transportbahnabschnitts (8, 8') und dem gekrümmten Hubbalken (20) unterstützt ist.

6. Transportvorrichtung nach einem der Ansprüche 1 bis 5,
dadurch gekennzeichnet,
daß sich an den gekrümmten Transportbahnabschnitt (2) beidendig Transportbahnabschnitte (8, 8') anschließen.

7. Transportvorrichtung nach einem der Ansprüche 1 bis 6,
dadurch gekennzeichnet,
daß für das mechanisierte Anheben und Absenken des gekrümmten Hubbalkens (20) ein aufrechter Linearantrieb, ein Exzenterantrieb, ein Nockenantrieb oder ein Hubkeilantrieb, jeweils vorzugsweise mit einer Zylinder-Kolben-Einheit (22), vorgesehen ist.

8. Transportvorrichtung nach dem Oberbegriff des Anspruches 1,
dadurch gekennzeichnet,
daß für einen gekrümmten Transportbahnabschnitt (2) zwischen zwei beidendig anschließenden Transportbahnabschnitten (8, 8') ein in einer oberen Aussparung (16) des gekrümmten Transportbahnabschnitts (2) verlaufendes, von unten unterstütztes, in Seitenrichtung flexibles Bewegungselement (30) für die Transportelemente (36) vorgesehen ist, das an dem Hubbalken (18, 18') mindestens eines der beiden anschließenden Transportbahnabschnitte (8, 8') befestigt und durch diesen in Längsrichtung antreibbar ist; und daß das flexible Bewegungselement (30, 30') klinkenartige Mitnehmer für die Transportelemente (36) aufweist, wobei die Mitnehmer bei der Rückbewegung des Bewegungselements (30, 30') unter den Transportelementen (36) vorbeigehen, vorzugsweise federnd nach unten ausweichen.

9. Transportvorrichtung nach einem der Ansprüche 1 bis 8,
dadurch gekennzeichnet,
daß das flexible Bewegungselement (30, 30') als Kette ausgebildet ist, dessen Kettenglieder (42) in seitlicher Richtung relativ zueinander verschwenkbar sind.

10. Transportvorrichtung nach Anspruch 9,
dadurch gekennzeichnet,
daß die Kettenglieder (42) durch Bolzen (50) miteinander verbunden sind, wobei zwischen dem jeweiligen Bolzen (50) und der Bolzenaufnahmebohrung (46) mindestens eines der beiden benachbarten Kettenglieder (42) Spiel für die Flexibilität der Kette besteht.

11. Transportvorrichtung nach einem der Ansprüche 1 bis 8,
dadurch gekennzeichnet,
daß das flexible Bewegungselement (30, 30') beabstandete Elementglieder (54) und mindestens ein Längs-Stahlseil (52), an dem die Elementglieder (54) befestigt sind, aufweist.

12. Transportvorrichtung nach dem Oberbegriff des Anspruches 1,
dadurch gekennzeichnet,
daß für einen gekrümmten Transportbahnabschnitt (2) vorgesehen sind:
(a) ein gekrümmter Hubbalken (20), der mechanisiert anhebbar und absenkbar ist und dem ein Längsantrieb, vorzugsweise ausgebildet als Zylinder-Kolben-Einheit (24), zugeordnet ist;
(b) eine verjüngte Ausbildung mindestens eines Endbereiches des gekrümmten Hubbalkens (20), derart, daß dieser Endbereich in einem benachbarten Transportbahnabschnitt (8, 8') eintreten kann, und

(c) eine verjüngte Ausbildung des dem gekrümmten Transportbahnabschnitt (2) zugewandten Endbereiches des Hubbalkens (18, 18') des benachbarten Transportbahnabschnitts (8, 8') derart, daß dieser Endbereich in den gekrümmten Transportbahnabschnitt (2) eintreten kann.

**Claims**

1. A conveying device, in particular for slaughterhouses or meat refrigerating rooms, for conveying transportation elements (36), in particular hooks for slaughter animals or parts of slaughter animals, in stepwise manner along a conveying path (10), comprising at least one lifting beam (18, 18', 20) associated with said conveying path (10) and being adapted to be lifted and lowered in mechanized manner, with transportation elements (36) located in the region of the lifting beam (18, 18', 20) being lifted off from the conveying path when said lifting beam is lifted and being deposited on said conveying path when said lifting beam (18, 18', 20) is lowered, and a drive (24) for moving the lifted-off transportation elements (36) in the longitudinal direction of said conveying path,
characterized in that the following is provided for a curved conveying path section (2):

(a) a curved lifting beam (20) adapted to be lifted and lowered in mechanized manner; and
(b) a movement element (30, 30') for said transportation elements (36) which is drivable in longitudinal direction and flexible in transverse direction and which extends from the lifting beam of an adjacent conveying path section (8, 8') at least to an end of said curved lifting beam (20).

2. A conveying device according to claim 1, characterized in that said curved lifting beam (20) has a longitudinal drive (24) of its own associated therewith, which is preferably in the form of a piston and cylinder unit.

3. A conveying device according to claim 1 or 2, characterized in that the flexible movement element (30, 30') is adapted to be driven by the lifting beam (18, 18') of the adjacent conveying path section (8, 8') and/or by the curved lifting beam (20).

4. A conveying device according to any one of claims 1 to 3, characterized in that the flexible movement element (30, 30'), in the region of the curved lifting beam (20), extends at the top side of the latter along the entire curved conveying path section (2) in an upper recess (16) of said conveying path section (2).

5. A conveying device according to any one of claims 1 to 4, characterized in that the flexible movement element (30, 30') is supported by a transition piece between the lifting beam (18, 18') of the adjacent conveying path section (8, 8') and the curved lifting beam (20).

6. A conveying device according to any one of claims 1 to 5, characterized in that the curved conveying path section (2) is adjoined on both ends thereof by conveying path sections (8).

7. A conveying device according to any one of claims 1 to 6, characterized in that an upright linear drive, an eccentric drive, a cam drive or a lifting wedge drive, each having preferably a piston and cylinder unit (22), is provided for said mechanized lifting and lowering of the curved lifting beam (20).

8. A conveying device according to the generic clause of claim 1, characterized in that, for a curved conveying path section (2) between two conveying path sections (8, 8') adjoining both ends of the latter, there is provided a movement element (30) for the transportation elements (36) which extends in an upper recess (16) of the curved conveying path section (2), is supported from its bottom side and is flexible in lateral direction and which is attached to the lifting beam (18, 18') of at least one of the two adjoining conveying path sections (8, 8') and is adapted to be driven by said section in longitudinal direction; and that said flexible movement element (30, 30') comprises catch-like dogs for said transportation elements (36), said dogs, when said movement element (30, 30') is moved back, passing underneath said transportation elements, preferably by evading resiliently in downward direction.

9. A conveying device according to any one of claims 1 to 8, characterized in that said flexible movement element (30, 30') is provided in the form of a chain whose chain links (42) are adapted to be pivoted relatively to each other in lateral direction.

10. A conveying device according to claim 9, characterized in that the chain links (42) are interconnected by bolts (50), there being play between the respective bolt (50) and the bolt receiving bore (46) of at least one of the two adjacent chain links (42) for providing the flexibility of the chain.

11. A conveying device according to any one of claims 1 to 8, characterized in that said flexible movement element (30, 30′) comprises spaced element members (54) and at least one longitudinal steel rope (52) on which the element members (54) are secured.

12. A conveying device according to the generic clause of claim 1,
characterized in that the following is provided for a curved conveying path section (2):
(a) a curved lifting beam (30) adapted to be lifted and lowered in mechanized manner and having associated therewith a longitudinal drive, preferably in the form of a piston and cylinder unit (24);
(b) a tapered configuration of at least one end portion of the curved lifting beam (20) such that this end portion is adapted to enter an adjacent conveying path section (8, 8′); and
(c) a tapered configuration of that end portion of the lifting beam (18, 18′) of the adjacent conveying path section (8, 8′) which faces the curved conveying path section (2), such that this end portion is adapted to enter the curved conveying path section (2).

**Revendications**

1. Dispositif de transport, en particulier pour abattoirs ou chambres froides à viande, pour déplacer pas-à-pas des éléments de transport (36), en particulier des crochets pour des animaux abattus ou des parties d'animaux abattus, le long d'une piste de transport (10), avec au moins une poutre de levage (18,18′,20), associée à la piste de transport (10), pouvant être soulevée et abaissée de façon motorisée, dans lequel les éléments de transport (36) se trouvant dans la zone de la poutre de levage (18,18′;20), lors du soulèvement de la poutre de levage, sont soulevés de la piste de transport, et, lors de l'abaissement de la poutre de levage (18,18′;20) sont déposés sur la piste de transport, et avec un entraînement (24) pour déplacer les éléments de transport (36) soulevés dans la direction longitudinale de la piste de transport,
caractérisé en ce que sont prévus, pour un tronçon de piste de transport (2) incurvé :
(a). une poutre de levage (20) incurvée, pouvant être levée et abaissée de façon motorisée; et
(b). un élément de déplacement (30,30′), pouvant être entraîné en direction longitudinale et flexible en direction latérale, destiné aux éléments de transport (36), qui s'étend depuis la poutre de levage d'un tronçon de piste de transport (8,8′) voisin, au moins jusqu'à une extrémité de la poutre de levage (20) incurvée.

2. Dispositif de transport selon la revendication 1, caractérisé en ce qu'un entraînement longitudinal (24) propre, de préférence réalisé sous forme d'ensemble à piston et cylindre, est associé à la poutre de levage (20) incurvée.

3. Dispositif de transport selon la revendication 1 ou 2, caractérisé en ce que l'élément de déplacement flexible (30,30′) peut être entraîné au moyen de la poutre de levage (18,18′) du tronçon de piste de transport (8,8′) voisin, et/ou de la poutre de levage (20) incurvée.

4. Dispositif de transport selon l'une des revendications 1 à 3, caractérisé en ce que l'élément de déplacement flexible (30,30′) s'étend dans la zone de la poutre de levage (20) incurvée, au-dessus de celle-ci, le long de l'ensemble du tronçon de piste de transport (2) incurvé, dans un évidement supérieur (16) du tronçon de piste de transport (2).

5. Dispositif de transport selon l'une des revendications 1 à 4, caractérisé en ce que l'élément de transport flexible (30,30′) est soutenu au moyen d'une pièce de transition, entre la poutre de levage (18,18′) du tronçon de piste de transport (8,8′) voisin et la poutre de levage incurvée (20).

6. Dispositif de transport selon l'une des revendications 1 à 5, caractérisé en ce que des tronçons de piste de transport (8,8′) se raccordent des deux côtés au tronçon de piste de transport incurvé (2).

7. Dispositif de transport selon l'une des revendications 1 à 6, caractérisé en ce qu'un entraînement linéaire vertical, un entraînement à excentrique, un entraînement à came ou un entraînement à coin de levage est prévu, chaque fois de préférence avec un ensemble à piston et cylindre (22), pour opérer le soulèvement et l'abaissement motorisé de la poutre de levage (20).

8. Dispositif de transport selon le préambule de la revendication 1, caractérisé en ce que, pour un tronçon de piste de transport incurvé (2), entre deux tronçons de piste de transport (8,8′) raccordés aux deux extrémités, est prévu, s'étendant dans un évidement supérieur (16) du tronçon de piste de transport incurvé (2), soutenu par le dessous, un élément de mouvement (30), flexible en direction latérale, pour les éléments de transport (36), assurant la fixation, sur la poutre de levage (18,18'), d'au moins l'un des deux tronçons de piste de transport (8,8') raccordés et pouvant être entraîné au moyen de ceux-ci dans la direction longitudinale ; et en ce que l'élément de transport flexible (30,30') présente des organes d'entraînement, du genre cliquets, pour les éléments de transport (36), les organes d'entraînement passant sous les éléments de transport (36) lors du mouvement de retour de l'élément de mouvement (30,30'), de préférence en s'écartant élastiquement vers le bas.

9. Dispositif de transport l'une des revendications 1 à 8, caractérisé en ce que l'élément de déplacement flexible (30,30') est réalisé sous forme d'une chaîne, dont les maillons (42) peuvent pivoter les uns par rapport aux autres en direction latérale.

10. Dispositif de transport selon la revendication 9, caractérisé en ce que les maillons de chaîne (42) son reliés ensemble par des boulons (50), un jeu étant laissé pour la flexibilité de la chaîne, entre le boulon (50) spécifique et l'alésage de réception de boulon (46) d'au moins l'un des deux maillons de chaîne (42) voisins.

11. Dispositif de transport l'une des revendications 1 à 8, caractérisé en ce que l'élément de déplacement flexible (30,30') présente des organes d'éléments (54) espacés et au moins un câble en acier longitudinal (42), auquel les organes d'élément (54) sont fixés.

12. Dispositif de transport selon le préambule de la revendication 1, caractérisé en ce que, pour un tronçon de piste de transport incurvé (2) sont prévus :

    (a) une poutre de levage incurvée (20), pouvant être levée et abaissée de façon motorisée et à laquelle est associé un entraînement longitudinal, de préférence réalisé sous la forme d'un ensemble à piston et cylindre (24);

    (b) une réalisation rétrécie d'au moins une zone d'extrémité de la poutre de levage incurvée (20), de telle façon que cette zone d'extrémité puisse entrer dans un tronçon de piste de transport (8,8') voisin , et

    (c) une réalisation rétrécie de la zone d'extrémité, tournée vers le tronçon de piste de transport (2) incurvé, de la poutre de levage (18,18') du tronçon de piste de transport (8,8') voisin, de telle façon que cette zone d'extrémité puisse entrer dans le tronçon de piste de transport (2) incurvé.

FIG.2

(a)          (b)

FIG.1

FIG.3

FIG.4

FIG.5

FIG.6